# EUROPÄISCHE PATENTSCHRIFT

(11) **EP 2 827 026 B1**
(45) Veröffentlichungstag und Bekanntmachung des Hinweises auf die Patenterteilung: **27.02.2019**
(21) Anmeldenummer: 14002371.4
(22) Anmeldetag: 10.07.2014
(51) Int. Cl.: F16J 15/3232, F16J 15/16, F16J 15/3276

(54) **Dichtungsanordnung und Dichtring**
Sealing assembly and sealing ring
Dispositif d'étanchéité dotée d'une bague d'étanchéité

(30) Priorität: 19.07.2013 DE 102013012044
(43) Veröffentlichungstag der Anmeldung: 21.01.2015
(73) Patentinhaber: Carl Freudenberg KG, 69469 Weinheim (DE)
(72) Erfinder: Vukovic, Igor, 34613 Schwalmstadt (DE); Sauerwein, Thoralf, 35037 Marburg (DE); Schenk, Richard, 34587 Felsberg (DE); Jäckel, Jürgen, 34637 Schrecksbach (DE)

(56) Entgegenhaltungen:
- EP-A2- 1 016 800
- JP-A- H07 239 042
- JP-A- 2008 170 009
- US-A- 5 040 804
- US-A- 5 642 889
- US-A- 5 895 052
- US-A1- 2004 188 950
- US-A1- 2012 313 328

## Beschreibung

### Technisches Gebiet

Die Erfindung betrifft eine Dichtungsanordnung und einen Dichtring, der Bestandteil der Dichtungsanordnung ist.

### Stand der Technik

Eine Dichtungsanordnung ist aus der DE 32 44 180 A1 bekannt. Der Dichtring ist dabei im Kolben einer Kolben-Zylinderanordnung montiert, wobei die Durchlassnut einen Druckraum mit einem Nachlaufraum verbindet.

Der Dichtring ist im Wesentlichen C-förmig ausgebildet. Bei Betätigung des Kolbens baut sich im Druckraum ein Druck auf, die erste Dichtlippe verformt sich dadurch elastisch radial nach außen und legt sich dichtend an die abzudichtende Fläche eines Zylinders an. Dabei werden die gegeneinander abzudichtenden Räume druckdicht voneinander getrennt.

Im drucklosen Zustand der vorbekannten Dichtungsanordnung sind die gegeneinander abzudichtenden Räume durch die Durchlassnut strömungsleitend miteinander verbunden. Eine statische Abdichtung ist bei der vorbekannten Dichtungsanordnung nicht vorgesehen. Im drucklosen Zustand der Dichtungsanordnung kann es passieren, dass das abzudichtende Medium die Durchlassnut unerwünscht passiert und in die benachbarte Umgebung austritt.

Aus der JP 7-239042 ist eine Dichtungsanordnung bekannt, umfassend einen als Radialwellendichtring ausgebildeten Dichtring zur Abdichtung einer umlaufenden Welle, die in einem Gehäuse angeordnet und durch den Dichtring gegenüber dem Gehäuse abgedichtet ist.

Der Dichtring umfasst zumindest eine erste Dichtlippe, die auf der dem abzudichtenden Raum zugewandten Seite des Dichtrings angeordnet ist, wobei die erste Dichtlippe zumindest eine Durchlassnut aufweist, zur strömungsleitenden Verbindung von zwei gegeneinander abzudichtenden Räumen. Einer der beiden abzudichtenden Räume ist der Innenraum des Gehäuses, der andere abzudichtende Raum ist ein Schmiermitteldepot, das durch die erste Dichtlippe, einen als weitere Dichtlippe ausgebildeten Dichtwulst und die abzudichtende Oberfläche der abzudichtenden Welle begrenzt ist. Die weitere Dichtlippe bildet die Hauptdichtlippe des vorbekannten Dichtrings, die erste Dichtlippe bildet demgegenüber eine Hilfsdichtlippe.

Um sicher zu stellen, dass das Schmiermitteldepot immer ausreichend mit Schmiermittel gefüllt und die Hauptdichtlippe dadurch stets ausreichend geschmiert ist, ist die Hilfsdichtlippe als Ventillippe ausgebildet und verbindet den abzudichtenden Raum mit dem Schmiermitteldepot strömungsleitend.

Die erste Dichtlippe berührt die abzudichtende Fläche des abzudichtenden Maschinenelements unter elastischer Vorspannung anliegend, wobei die erste Dichtlippe stirnseitig einerseits des Dichtrings auf der dem ersten abzudichtenden Raum zugewandten Seite des Dichtrings angeordnet ist. Eine zweite Dichtlippe ist stirnseitig andererseits des Dichtrings auf der der Umgebung zugewandten Seite angeordnet, bildet eine Vorschaltdichtung für die Hauptdichtlippe und hält Verunreinigungen aus der Umgebung von dieser fern. Die zweite Dichtlippe berührt die abzudichtende Fläche des Maschinenelements im drucklosen Zustand der Dichtungsanordnung unter elastischer radialer Vorspannung anliegend. In axialer Richtung zwischen der ersten und der zweiten Dichtlippe ist die als Dichtwulst ausgebildete Hauptdichtlippe angeordnet. Die als Ventillippe ausgebildete erste Dichtung berührt die abzudichtende Fläche in allen Betriebszuständen unter elastischer Vorspannung dichtend.

### Ausführung der Erfindung

Der Erfindung liegt die Aufgabe zugrunde, eine Dichtungsanordnung der vorbekannten Art derart weiterzuentwickeln, dass im drucklosen Zustand eine statische Abdichtung ein unerwünschtes Austreten des Mediums in die benachbarte Umgebung verhindert.

Diese Aufgabe wird erfindungsgemäß durch die Merkmale von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist eine Dichtungsanordnung vorgesehen, umfassend einen Dichtring zur gegenseitigen Abdichtung eines abzudichtenden Maschinenelements und eines relativ translatorisch dazu beweglichen kraftübertragenden Elements, wobei der Dichtring zumindest eine erste Dichtlippe mit zumindest einer Durchlassnut aufweist, zur strömungsleitenden Verbindung von zwei gegeneinander abzudichtenden Räumen, wobei die erste Dichtlippe eine abzudichtende Fläche eines abzudichtenden Maschinenelements unter elastischer Vorspannung anliegend berührt, wobei die erste Dichtlippe stirnseitig einerseits des Dichtrings auf der dem ersten abzudichtenden Raum zugewandten Seite des Dichtrings angeordnet ist, wobei eine zweite Dichtlippe stirnseitig andererseits des Dichtrings auf der dem zweiten abzudichtenden Raum zugewandten Seite angeordnet ist, wobei die zweite Dichtlippe die abzudichtende Fläche des Maschinenelements im drucklosen Zustand der Dichtungsanordnung unter elastischer radialer Vorspannung anliegend berührt, wobei die zweite Dichtlippe als Ventillippe zur Begrenzung eines relativen Überdrucks im ersten abzudichtenden Raum gegenüber dem zweiten abzudichtenden Raum ausgebildet ist, wobei in axialer Richtung zwischen der ersten und der zweiten Dichtlippe zumindest ein Dichtwulst angeordnet ist, der der abzudichtenden Fläche im drucklosen Zustand der Dichtungsanordnung mit radialem Abstand benachbart zugeordnet ist und wobei der Dichtwulst mit der Ventillippe in einer funktionstechnischen Reihenschaltung derart angeordnet ist, dass im drucklosen Zustand der Dichtungsanordnung der Dichtwulst der abzudichtenden Fläche mit radialem Abstand benachbart zugeordnet ist und die Ventillippe die abzudichtende Fläche unter elastischer Vorspannung dichtend berührt, dass bei Einleitung eines Druckstoßes durch die Durchlassnut der Dichtwulst der abzudichtenden Fläche mit radialem Abstand benachbart zugeordnet ist und die Ventillippe, zum Abbau des relativen Überdrucks des Druckstoßes, von der abzudichtenden Fläche abhebbar ist und dass bei Überschreitung eines vorbestimmten Differenzdrucks zwischen den gegeneinander abzudichtenden Räumen der Dichtwulst nach Überwindung des radialen Abstands dichtend an die abzudichtende Fläche anlegbar ist und die Ventillippe die abzudichtende Fläche anliegend berührt und einen Abstreifer bildet.

Die zweite Dichtlippe bildet bei der statisch ruhenden Dichtungsanordnung eine statische Abdichtung. Im drucklosen Zustand der Dichtungsanordnung, wenn also zwischen den gegeneinander abzudichtenden Räumen praktisch kein Differenzdruck anliegt, dichtet die Ventillippe das abzudichtende Medium gegen die abzudichtende Fläche zuverlässig ab. Das abzudichtende Medium kann dadurch nicht vom ersten abzudichtenden Raum durch die Durchlassnut hindurch in den zweiten abzudichtenden Raum gelangen, weil dieser durch die Ventillippe abgedichtet ist.

Zur Funktion der Dichtungsanordnung wird weiter Folgendes ausgeführt:
Im durcklosen Zustand der Dichtungsanordnung ist der Dichtwulst der abzudichtenden Fläche mit radialem Abstand benachbart zugeordnet. Die Ventillippe berührt demgegenüber die abzudichtende Fläche unter elastischer radialer Vorspannung dichtend, so dass eine Leckage des abzudichtenden Mediums vom ersten abzudichtenden Raum in den zweiten abzudichtenden Raum ausgeschlossen ist.

Während der bestimmungsgemäßen Verwendung der Dichtungsanordnung wird der abzudichtende erste Raum mit Druck beaufschlagt, beispielsweise um einen Kolben innerhalb einer Kolben-Zylinder-Anordnung in axialer Richtung translatorisch zu bewegen. Um eine möglichst feinfühlige und weitgehend verzögerungsfreie Betätigung des Kolbens in der Kolben-Zylinder-Anordnung zu gewährleisten, ist es zweckmäßig, wenn sich auf der der ersten Dichtlippe axial zugewandten Seite der zweiten Dichtlippe möglichst kein Druckpolster aufbauen kann. Um das zu gewährleisten, ist es erforderlich, dass das auf der der ersten Dichtlippe axial zugewandten Seite der zweiten Dichtlippe befindliche abzudichtende Medium möglichst rasch aus diesem Bereich in den zweiten Raum ausgeschoben wird, der im Vergleich zum ersten abzudichtenden Raum einen relativ geringeren Druck aufweist.

Bei Einleitung eines Druckstoßes durch die Durchlassnut bewegt sich der Dichtwulst zunächst noch nicht sofort radial in Richtung der abzudichtenden Fläche sondern verharrt weitgehend in der Position, die er auch im drucklosen Zustand der Dichtungsanordnung hatte. Demgegenüber hebt die Ventillippe, zum Abbau der Druckspitze, die durch den Druckstoß entstanden ist, von der abzudichtenden Fläche kurzzeitig ab.

Nach dem anfänglichen Druckstoß, wenn der Differenzdruck zwischen den beiden gegeneinander abzudichtenden Räumen einen vorbestimmten Schwellwert überschritten hat, verformt sich die erste Dichtlippe elastisch derart, dass sich der Dichtwulst dichtend an die abzudichtende Oberfläche anlegt und dadurch die gegeneinander abzudichtenden Räume zuverlässig voneinander trennt; eine Leckage des abzudichtenden Mediums vom ersten abzudichtenden Raum in den zweiten abzudichtenden Raum wird dadurch zuverlässig verhindert.

Die erste Dichtlippe und der Dichtwulst können im Wesentlichen Y-förmig miteinander verbunden sein, wobei die jeweilige Basis der ersten Dichtlippe und des Dichtwulstes in einem gemeinsamen, gedachten Drehpunkt eines Gelenks zusammengeführt sind und wobei der Dichtwulst, bei Überdruckbeaufschlagung der ersten Dichtlippe, um den Drehpunkt schwenkbar und an die abzudichtende Fläche dichtend anlegbar ist. Im Drehpunkt sind die erste Dichtlippe und der Dichtwulst relativ ortsfest und unbeweglich zusammengeführt. Die Bewegung des Drehpunkts und die dichtende Berührung des Dichtwulstes an der abzudichtenden Fläche erfolgt durch eine elastische Verformung der im Wesentlichen Y-förmigen Verbindung. Bei einer Überdruckbeaufschlagung der ersten Dichtlippe wird diese selbst verstärkt an die abzudichtende Fläche angepresst, die Y-förmige Verbindung spreizt sich weiter auf und der Dichtwulst wird In einer im Wesentlichen kreisbogenförmigen Bewegung so lange um den Drehpunkt des Gelenks herumgeführt, bis er sich an die abzudichtende Fläche dichtend anlegt In diesem Betriebszustand findet eine vollständige Abdichtung der beiden gegeneinander abzudichtenden Räume durch den Dichtwulst statt. Die Ventillippe berührt die abzudichtende Fläche lediglich unter einer geringen elastischen Vorspannung und fungiert während der bestimmungsgemäßen Verwendung der Dichtungsanordnung in diesem Betriebszustand nur noch als Abstreifer. Die Ventillippe verhindert, dass Verunreinigungen vom zweiten abzudichtenden Raum in die Dichtungsanordnung gelangen.

Um die zuvor beschriebene Funktion ausführen zu können, ist von Vorteil, dass die erste Dichtlippe und der Dichtwulst aus einem gummielastischen Werkstoff bestehen und einstückig ineinander übergehend ausgebildet sind. Als gummielastische Werkstoffe können übliche elastomere Dichtungswerkstoffe zur Anwendung gelangen. Durch die einstückige und materialeinheitliche Ausgestaltung der ersten Dichtlippe und des Dichtwulstes ist der Dichtring der Dichtungsanordnung besonders einfach und kostengünstig herstellbar und die Montage des Dichtrings in der Dichtungsanordnung vereinfacht.

Die erste Dichtlippe und der Dichtwulst können einstückig ineinander übergehend und materialeinheitlich mit dem Gelenk ausgebildet sein. Dadurch, dass die Beweglichkeit des Gelenks ausschließlich durch die elastische Nachgiebigkeit der verwendeten Werkstoffe erfolgt und nicht durch ein separat herzustellendes und zu montierendes Gelenk, das mit der ersten Dichtlippe und dem Dichtwulst verbunden werden müsste, ist der Dichtring einfach und kostengünstig herstellbar und die Dichtungsanordnung ist einfach montierbar.

Besonders einfach sind Aufbau und Herstellung des Dichtrings der Dichtungsanordnung dann, wenn die erste Dichtlippe, die zweite Dichtlippe und der Dichtwulst aus einem gummielastischen Werkstoff bestehen. Sind die erste Dichtlippe, die zweite Dichtlippe und der Dichtwulst einstückig ineinander übergehend und materialeinheitlich ausgebildet, ebenso wie das Gelenk, kann der Dichtring in einem einzigen Arbeitsschritt hergestellt werden. Zum Beispiel kann der gummielastische Werkstoff in einem Arbeitsschritt an einen Stützkörper angespritzt werden, der ebenfalls Bestandteil des Dichtrings ist.

Die erste Dichtlippe, die zweite Dichtlippe und der Dichtwulst können an einem Axialvorsprung eines Stützkörpers des Dichtrings angeordnet und der abzudichtenden Fläche radial zugewandt sein. Der Stützkörper bewirkt, dass die Formstabilität des Dichtrings auch bei einer Beaufschlagung mit höheren Drücken erhalten bleibt. Der Stützkörper besteht bevorzugt aus einem zähharten Werkstoff, beispielsweise aus einem metallischen Werkstoff.

Axial benachbart zum Dichtwulst kann auf der der zweiten Dichtlippe axial zugewandten Seite ein im Wesentlichen entsprechender Stützwulst angeordnet sein. Dieser Stützwulst hat die Aufgabe, den hier beschriebenen Dichtring zu führen und die Dichtlippe vor einer zu starken radialen Auslenkung zu schützen sowie die Spannungen im Werkstoff bei Deformation zu senken.

Die erste Dichtlippe kann mehrere, gleichmäßige in Umfangsrichtung verteilt angeordnete Durchlassnuten ausweisen.

Hierbei ist von Vorteil, dass die Durchströmung der Durchlassnuten mit dem abzudichtenden Medium, über den Umfang betrachtet, gleichmäßig erfolgt und die Gefahr einer ungleichmäßigen Belastung und Verkantung des Dichtrings während der bestimmungsgemäßen Verwendung auf ein Minimum reduziert ist.

Außerdem betrifft die Erfindung einen Dichtring, wie zuvor beschrieben. In axialer Richtung zwischen der ersten Dichtlippe und der zweiten Dichtlippe ist der durch Differenzdruck betätigbare Dichtwulst angeordnet.

Wie zuvor bereits beschrieben, ist es vorgesehen, dass die erste Dichtlippe und der Dichtwulst im Wesentlichen Y-förmig miteinander verbunden sind, wobei die jeweilige Basis der ersten Dichtlippe und des Dichtwulstes in einem gemeinsamen, gedachten Drehpunkt eines Gelenks zusammengeführt sind und wobei der Dichtwulst, bei Überdrückbeaufschlagung der ersten Dichtlippe, um den Drehpunkt schwenkbar und an die abzudichtende Fläche der Dichtungsanordnung dichtend anlegbar ist

### Kurzbeschreibung der Zeichnung

Ein Ausführungsbeispiel der erfindungsgemäßen Dichtungsanordnung mit dem erfindungsgemäßen Dichtring ist in den Figuren 1 bis 4 schematisch dargestellt und wird im Folgenden näher erläutert.

Die Figuren zeigen:
- Fig. 1: die Dichtungsanordnung in dem Betriebszustand "drucklos", das heißt kein Differenzdruck zwischen dem ersten und dem zweiten abzudichtenden Raum,
- Fig. 2: der Dichtring aus der Dichtungsanordnung gemäß Fig. 1 wird auf der dem ersten abzudichtenden Raum zugewandten Seite mit einem Druckstoß beaufschlagt,
- Fig. 3: der Differenzdruck zwischen dem ersten abzudichtenden Raum und dem zweiten abzudichtenden Raum ist hier maximal,
- Fig. 4: den Dichtring aus der Dichtungsanordnung gemäß Figuren 1 bis 3 als Einzelteil und in perspektivischer Darstellung.

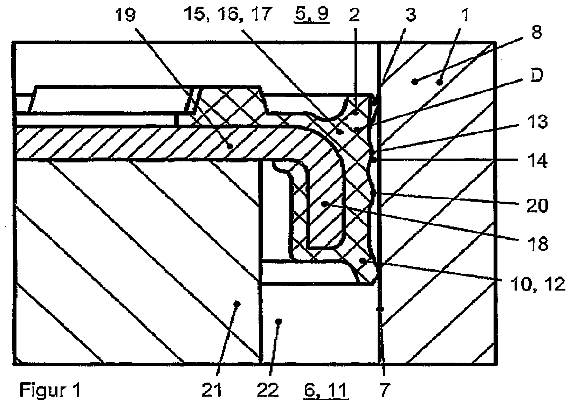

In den Fig. 1 bis 3 ist ein Ausführungsbeispiel einer erfindungsgemäßen Dichtungsanordnung gezeigt.

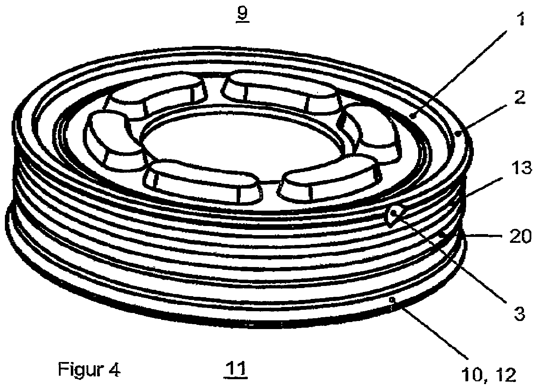

In Fig. 4 ist der Dichtring gezeigt, der in der Dichtungsanordnung gemäß Fig. 1 bis 3 zur Anwendung gelangt.

In den Fig. 1 bis 3 ist eine erfindungsgemäße Dichtungsanordnung in drei unterschiedlichen Betriebszuständen gezeigt.

Die Dichtungsanordnung umfasst den Dichtring 1, der in Fig. 4 als Einzelteil dargestellt ist, das abzudichtende Maschinenelement 8 mit der abzudichtenden Fläche 7, das in dem hier dargestellten Ausführungsbeispiel durch ein Gehäuse gebildet ist und ein kraftübertragendes Element 21. Das abzudichtende Maschinenelement 8 umschließt das kraftübertragende Element 21 mit radialem Abstand, wobei in dem durch den Abstand gebildeten Spalt 22 der Dichtring 1 angeordnet ist.

Der Dichtring 1 umfasst auf der dem ersten abzudichtenden Raum 5 axial zugewandten Stirnseite die erste Dichtlippe 2 und auf der dem Zweiten abzudichtenden Raum 6 axial zugewandten Seite die zweite Dichtlippe 10. In axialer Richtung zwischen der ersten Dichtlippe 2 und der zweiten Dichtlippe 10 ist in dem hier gezeigten Ausführungsbeispiel der Dichtwulst 13 angeordnet, wobei in axialer Richtung zwischen dem Dichtwulst 13 und der zweiten Dichtlippe 10 der Stützwulst 20 angeordnet ist.

Außerdem umfasst der Dichtring 1 den Stützkörper 19, der einen Axialvorsprung 18 aufweist. Der Axialvorsprung 18 ist vollständig von dem elastomeren Werkstoff ummantelt, aus dem die beiden Dichtlippen 2, 10, der Dichtwulst 13 und der Stützwulst 20 bestehen.

In jedem der Betriebszustände, die in den Fig. 1 bis 3 dargestellt sind, berührt die erste Dichtlippe 2 die abzudichtende Fläche 7 des abzudichtenden Maschinenelements 8 unter erlastischer Vorspannung anliegend. Die erste Dichtlippe 2 weist mehrere gleichmäßige in Umfangsrichtung verteilt angeordnete Durchlassnuten 3, 3.1, ...auf, so dass der abzudichtende erste Raum 5 strömungsleitend mit dem axialen Zwischenraum zwischen den beiden Dichtlippen 2, 10 verbunden ist.

Die erste Dichtlippe 2 und der Dichtwulst 13 sind im Wesentlichen Y-förmig miteinander verbunden. Die jeweilige Basis 15, 16 der ersten Dichtlippe 2 und des Dichtwulsts 13 sind in einem gemeinsamen, gedachten Drehpunkt D des Gelenks 17 zusammengeführt, wobei sich die Funktion des Gelenks ausschließlich durch die elastische Nachgiebigkeit des gummielastischen Werkstoffs ergibt, aus dem zumindest die erste Dichtlippe 2 und der Dichtwulst 13 bestehen, in dem hier gezeigten Ausführungsbeispiel der gummielastische Werkstoff, aus dem die erste Dichtlippe 2, der Dichtwulst 13, der Stützwulst 20 und die als Ventillippe 12 ausgebildete zweite Dichtlippe 10 bestehen.

Zur Funktion der Dichtungsanordnung wird folgendes ausgeführt:
In Fig. 1 ist die Dichtungsanordnung in drucklosem Zustand gezeigt. In den beiden abzudichtenden Räumen 5, 6 herrscht ein im Wesentlichen übereinstimmender Druck; eine nennenswerte Druckdifferenz gibt es folglich nicht.

In diesem Betriebszustand soll durch die beanspruchte Dichtungsanordnung und den beanspruchten Dichtring 1 sichergestellt werden, dass abzudichtendes Medium, das sich im ersten abzudichtenden Raum 5 befindet, nicht durch die Durchlassnuten 3, 3.1, ... hindurch in den zweiten abzudichtenden Raum 6 gelangen kann.

Dazu ist die zweite Dichtlippe 10 vorgesehen, die als Ventillippe 12 ausgebildet ist. Die Ventillippe 12 berührt die abzudichtende Fläche 7 unter elastischer Vorspannung dichtend und hält dadurch das abzudichtende Medium aus dem abzudichtenden zweiten Raum 6 fern.

In dem hier geschilderten Betriebszustand sind der Dichtwulst 13 und der Stützwulst 20 der abzudichtenden Fläche 7 des abzudichtenden Maschinenelements 8 mit radialem Abstand benachbart zugeordnet.

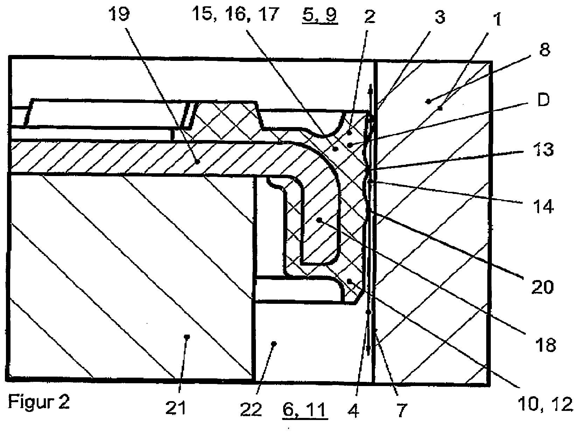

In Figur 2 wird ein Druckstoß im ersten abzudichtenden Raum 5 erzeugt und auf das kraftübertragende Element 21 und damit auf den Dichtring 1 gegeben, der mit dem kraftübertragenden Element 21 montiert ist.

Um ein möglichst rasches Ansprechen des kraftübertragenden Elements 21 bei Beaufschlagung des ersten abzudichtenden Raums 5 mit einem relativen Überdruck, bezogen auf den zweiten abzudichtenden Raum 6 zu gewährleisten, ist von Vorteil, wenn der erste abzudichtende Raum 5 mit dem zweiten abzudichtenden Raum 6 kurzzeitig strömungsleitend verbunden ist, so dass im Bereich des Außenumfangs des Dichtrings 1 kein Druckpolster entstehen kann, das die Betätigung des kraftübertragenden Elements 21 verzögert. Bei Druckbeaufschlagung des Dichtrings 1 im ersten abzudichtenden Raum 5 strömt das abzudichtende Medium durch die Durchlassnuten 3, 3.1, ... am Dichtwulst 13 und dem Stützwulst 20 vorbei, die der abzudichtenden Fläche 7 beide noch immer mit radialem Abstand benachbart zugeordnet sind. Die Ventillippe 12 wird dadurch betätigt, hebt von der abzudichtenden Fläche 7 ab und lässt das abzudichtende Medium kurzzeitig passieren.

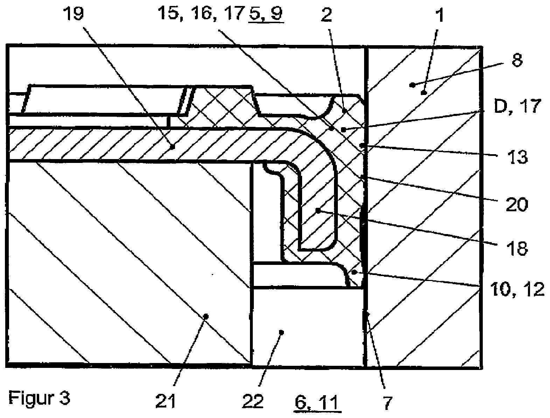

In Fig. 3 ist der Betriebszustand dargestellt, bei dem der Differenzdruck zwischen dem ersten abzudichtenden Raum 5 und dem zweiten abzudichtenden Raum 6 nach Einleitung des Druckstoßes, größer bis maximal ist.

Durch die Überdruckbeaufschlagung der dem ersten abzudichtenden Raum 5 zugewandten Seite 9 des Dichtrings 1 verformt sich der gummielastische Werkstoff, aus dem die erste Dichtlippe 2 und der Dichtwulst 13 bestehen, elastisch nachgiebig. Diese Verformung ist dadurch möglich, dass die erste Dichtlippe 2 und der Dichtwulst 13 im Wesentlichen Y-förmig miteinander verbunden sind und der Dichtwulst 13, bei der zuvor beschriebenen Druckbeaufschlagung, um den Drehpunkt D des Gelenks 17 in Richtung der abzudichtenden Fläche 7 geschwenkt wird und sich anschließend dichtend an der abzudichtenden Fläche 7 anlegt. Dadurch sind die beiden gegeneinander abzudichtenden Räume 5, 6 druckdicht voneinander getrennt.

In diesem Betriebszustand ist die Ventillippe 12, genau wie in Fig. 1, unter elastischer Vorspannung an die abzudichtende Fläche 7 angelegt, wobei die Dichtfunktion primär vom Dichtwulst 13 übernommen wird.

In Fig. 4 ist der Dichtring aus den Fig. 1 bis 3, der einen Bestandteil der Dichtungsanordnung bildet, als Einzelteil in einer perspektivischen Darstellung gezeigt.

Am Außenumfang des Dichtrings 1 sind die beiden Dichtlippen 2, 10 gezeigt, von denen jede stirnseitig 9, 10 Angeordnet ist. In axialer Richtung zwischen den beiden Dichtlippen 2, 10 sind der Dichtwulst 13 und der Stützwulst 20 angeordnet.

Die erste Dichtlippe 2 weist mehrere in Umfangsrichtung gleichmäßig verteilt angeordnete Durchlassnuten 3, 3.1, ... auf.

## Patentansprüche

1. Dichtungsanordnung, umfassend einen Dichtring (1) zur gegenseitigen Abdichtung eines abzudichtenden Maschinenelements (8) und eines relativ translatorisch dazu beweglichen kraftübertragenden Elements (21), wobei der Dichtring (1) zumindest eine erste Dichtlippe (2) mit zumindest einer Durchlassnut (3) aufweist, zur strömungsleitenden Verbindung (4) von zwei gegeneinander abzudichtenden Räumen (5, 6), wobei die erste Dichtlippe (2) eine abzudichtende Fläche (7) eines abzudichtenden Maschinenelements (8) unter elastischer Vorspannung anliegend berührt, wobei die erste Dichtlippe (2) stirnseitig einerseits des Dichtrings (1) auf der dem ersten abzudichtenden Raum (5) zugewandten Seite (9) des Dichtrings (1) angeordnet ist, wobei eine zweite Dichtlippe (10) stirnseitig andererseits des Dichtrings (1) auf der dem zweiten abzudichtenden Raum (6) zugewandten Seite (11) angeordnet ist, wobei die zweite Dichtlippe (10) die abzudichtende Fläche (7) des Maschinenelements (8) im drucklosen Zustand der Dichtungsanordnung unter elastischer radialer Vorspannung anliegend berührt, wobei die zweite Dichtlippe (10) als Ventillippe (12) zur Begrenzung eines relativen Überdrucks im ersten abzudichtenden Raum (5) gegenüber dem zweiten abzudichtenden Raum (6) ausgebildet ist, wobei in axialer Richtung zwischen der ersten (2) und der zweiten Dichtlippe (10) zumindest ein Dichtwulst (13) angeordnet ist, der der abzudichtenden Fläche (7) im drucklosen Zustand der Dichtungsanordnung mit radialem Abstand (14) benachbart zugeordnet ist und wobei der Dichtwulst (13) mit der Ventillippe (12) in einer funktionstechnischen Reihenschaltung derart angeordnet ist, dass im drucklosen Zustand der Dichtungsanordnung der Dichtwulst (13) der abzudichtenden Fläche (7) mit radialem Abstand (14) benachbart zugeordnet ist und die Ventillippe (12) die abzudichtende Fläche (7) unter elastischer Vorspannung dichtend berührt, dass bei Einleitung eines Druckstoßes durch die Durchlassnut (3) der Dichtwulst (13) der abzudichtenden Fläche (7) mit radialem Abstand (14) benachbart zugeordnet ist und die Ventillippe (12), zum Abbau des relativen Überdrucks des Druckstoßes, von der abzudichtenden Fläche (7) abhebbar ist und dass bei Überschreitung eines vorbestimmten Differenzdrucks zwischen den gegeneinander abzudichtenden Räumen (5, 6) der Dichtwulst (13) nach Überwindung des radialen Abstands (14) dichtend an die abzudichtende Fläche (7) anlegbar ist und die Ventillippe (12) die abzudichtende Fläche (7) anliegend berührt und einen Abstreifer bildet.

2. Dichtungsanordnung nach Anspruch 1, **dadurch gekennzeichnet, dass** die erste Dichtlippe (2) und der Dichtwulst (13) im Wesentlichen Y-förmig miteinander verbunden sind, dass die jeweilige Basis (15, 16) der ersten Dichtlippe (2) und des Dichtwulsts (13) in einem gemeinsamen, gedachten Drehpunkt (D) eines Gelenks (17) zusammengeführt sind und dass der Dichtwulst (13), bei Überdruckbeaufschlagung der ersten Dichtlippe (2), um den Drehpunkt (D) schwenkbar und an die abzudichtende Fläche (7) dichtend anlegbar ist.

3. Dichtungsanordnung nach einem der Ansprüche 1 oder 2, **dadurch gekennzeichnet, dass** die erste Dichtlippe (2) und der Dichtwulst (13) aus einem gummielastischen Werkstoff bestehen und einstückig ineinander übergehend ausgebildet sind.

4. Dichtungsanordnung nach einem der Ansprüche 2 oder 3, **dadurch gekennzeichnet, dass** die erste Dichtlippe (2) und der Dichtwulst (13) einstückig ineinander übergehend und materialeinheitlich mit dem Gelenk (17) ausgebildet sind.

5. Dichtungsanordnung nach einem der Ansprüche 1 bis 4, **dadurch gekennzeichnet, dass** die erste Dichtlippe (2), die zweite Dichtlippe (10) und der Dichtwulst (13) aus einem gummielastischen Werkstoff bestehen.

6. Dichtungsanordnung nach einem der Ansprüche 1 bis 5, **dadurch gekennzeichnet, dass** die erste Dichtlippe (2), die zweite Dichtlippe (10) und der Dichtwulst (13) an einem Axialvorsprung (18) eines Stützkörpers (19) des Dichtrings (1) angeordnet und der abzudichtenden Fläche (7) radial zugewandt sind.

7. Dichtungsanordnung nach einem der Ansprüche 1 bis 6, **dadurch gekennzeichnet, dass** axial benachbart zum Dichtwulst (13), auf der der zweiten Dichtlippe (10) axial zugewandten Seite, ein im Wesentlichen entsprechender Stützwulst (20) angeordnet ist.

8. Dichtungsanordnung nach einem der Ansprüche 1 bis 7, **dadurch gekennzeichnet, dass** die erste Dichtlippe (2) mehrere, gleichmäßig in Umfangsrichtung verteilt angeordnete Durchlassnuten (3, 3.1, ...) aufweist.

9. Dichtring einer Dichtungsanordnung nach einem der Ansprüche 1 bis 8, **dadurch gekennzeichnet, dass** in axialer Richtung zwischen der ersten Dichtlippe (2) und der zweiten Dichtlippe (10) der durch Differenzdruck betätigbare Dichtwulst (13) angeordnet ist.

## Claims

1. Seal assembly, comprising a sealing ring (1) for mutually sealing a machine element (8) to be sealed and a force-transmitting element (21) movable relatively translationally thereto, wherein the sealing ring (1) has at least a first sealing lip (2) having at least one groove passage (3), for the flow-conducting connection (4) of two spaces (5, 6) to be sealed with respect to one another, the first sealing lip (2) being in abutting contact under elastic prestress with a surface (7) to be sealed of a machine element (8) to be sealed, wherein the first sealing lip (2), on one end face of the sealing ring (1), is arranged on the side (9) of the sealing ring (1) that is facing the first space (5) to be sealed, wherein a second sealing lip (10), on the other end face of the sealing ring (1), is arranged on the side (11) that is facing the second space (6) to be sealed, wherein the second sealing lip (10) is in abutting contact under elastic prestress with the surface (7) to be sealed of the machine element (8) in the pressureless state of the seal assembly, wherein the second sealing lip (10) is formed as a valve lip (12) for limiting a relative positive pressure in the first space (5) to be sealed with respect to the second space (6) to be sealed, wherein at least one sealing bead (13), which in the pressureless state of the seal assembly is assigned to the surface (7) to be sealed by being adjacent thereto at a radial distance (14), is arranged between the first sealing lip (2) and the second sealing lip (10) in the axial direction, and wherein the sealing bead (13) is arranged in a functional series connection with the valve lip (12) in such a way that, in the pressureless state of the seal assembly, the sealing bead (13) is assigned to the surface (7) to be sealed by being adjacent thereto at a radial distance (14) and the valve lip (12) is in sealing contact under elastic prestress with the surface (7) to be sealed, in that, when a pressure surge is introduced through the groove passage (3), the sealing bead (13) is assigned to the surface (7) to be sealed by being adjacent thereto at a radial distance (14) and the valve lip (12) can be lifted off from the surface (7) to be sealed to reduce the relative positive pressure of the pressure surge, and in that, if a predetermined differential pressure between the spaces (5, 6) to be sealed with respect one another is exceeded, the sealing bead (13) can be brought to bear in a sealing manner against the surface (7) to be sealed after overcoming the radial distance (14), and the valve lip (12) is in abutting contact with the surface (7) to be sealed and forms a wiper.

2. Seal assembly according to Claim 1, **characterized in that** the first sealing lip (2) and the sealing bead (13) are connected to one another in a substantially Y-shaped manner, **in that** the respective base (15, 16) of the first sealing lip (2) and of the sealing bead (13) are brought together at a common, imaginary pivot point (D) of a joint (17) and **in that**, when positive pressure is applied to the first sealing lip (2), the sealing bead (13) can be pivoted about the pivot point (D) and can be brought to bear in a sealing manner against the surface (7) to be sealed.

3. Seal assembly according to either of Claims 1 and 2, **characterized in that** the first sealing lip (2) and the sealing bead (13) consist of a rubber-elastic material and are formed as merging one into the other in one piece.

4. Seal assembly according to either of Claims 2 and 3, **characterized in that** the first sealing lip (2) and the sealing bead (13) are formed as merging one into the other in one piece and of one and the same material with the joint (17).

5. Seal assembly according to one of Claims 1 to 4, **characterized in that** the first sealing lip (2), the second sealing lip (10) and the sealing bead (13) consist of a rubber-elastic material.

6. Seal assembly according to one of Claims 1 to 5, **characterized in that** the first sealing lip (2), the second sealing lip (10) and the sealing bead (13) are arranged on an axial projection (18) of a supporting body (19) of the sealing ring (1) and are facing radially towards the surface (7) to be sealed.

7. Seal assembly according to one of Claims 1 to 6, **characterized in that** arranged axially adjacent to the sealing bead (13), on the side axially facing the second sealing lip (10), is a substantially corresponding supporting bead (20).

8. Seal assembly according to one of Claims 1 to 7, **characterized in that** the first sealing lip (2) has a number of groove passages (3, 3.1, ...) arranged distributed uniformly in the circumferential direction.

9. Sealing ring of a seal assembly according to one of Claims 1 to 8, **characterized in that** arranged between the first sealing lip (2) and the second sealing lip (10) in the axial direction is the sealing bead (13), which can be actuated by differential pressure.

## Revendications

1. Ensemble d'étanchéité comportant une bague d'étanchéité (1) servant à réaliser l'étanchéité réciproque d'un élément de machine (8) à rendre étanche et d'un élément (21) de transmission de force mobile relativement à celui-ci en translation, la bague d'étanchéité (1) comprenant au moins une première lèvre d'étanchéité (2) dotée d'au moins une rainure de passage (3), servant à la liaison fluidique (4) de deux espaces (5, 6) à rendre étanches l'un par rapport à l'autre, la première lèvre d'étanchéité (2) étant en contact étroit, sous précontrainte élastique, avec une surface (7) à rendre étanche d'un élément de machine (8) à rendre étanche, la première lèvre d'étanchéité (2) étant disposée, du côté frontal, d'un côté de la bague d'étanchéité (1) sur le côté (9) de la bague d'étanchéité (1) tourné vers le premier espace (5) à rendre étanche, une deuxième lèvre d'étanchéité (10) étant disposée, du côté frontal, de l'autre côté de la bague d'étanchéité (1) sur le côté (11) tourné vers le deuxième espace (6) à rendre étanche, la deuxième lèvre d'étanchéité (10) étant en contact étroit avec la surface (7) à rendre étanche de l'élément de machine (8) à l'état sans pression de l'ensemble d'étanchéité sous précontrainte radiale élastique, la deuxième lèvre d'étanchéité (10) étant réalisée sous forme de lèvre de soupape (12) servant à limiter une surpression relative dans le premier espace (5) à rendre étanche par rapport au deuxième espace (6) à rendre étanche, au moins un bourrelet d'étanchéité (13) étant disposé dans la direction axiale entre la première (2) et la deuxième lèvre d'étanchéité (10), lequel bourrelet d'étanchéité est associé à la surface (7) à rendre étanche à l'état sans pression de l'ensemble d'étanchéité de manière adjacente à une distance radiale (14), et le bourrelet d'étanchéité (13) étant disposé avec la lèvre de soupape (12) dans un montage en série fonctionnel de telle sorte qu'à l'état sans pression de l'ensemble d'étanchéité, le bourrelet d'étanchéité (13) est associé à la surface (7) à rendre étanche de manière adjacente à une distance radiale (14) et que la lèvre de soupape (12) est en contact étroit avec la surface (7) à rendre étanche sous précontrainte élastique, que lors de l'introduction d'une impulsion de pression à travers la rainure de passage (3), le bourrelet d'étanchéité (13) est associé à la surface (7) à rendre étanche de manière adjacente à distance radiale (14) et que la lèvre de soupape (12) peut être soulevée de la surface (7) à rendre étanche pour réduire la surpression relative de l'impulsion de pression, et que, lors du dépassement d'une pression différentielle prédéfinie entre les espaces (5, 6) à rendre étanches l'un par rapport à l'autre, le bourrelet d'étanchéité (13) peut être appliqué de manière étanche contre la surface (7) à rendre étanche après avoir franchi la distance radiale (14) et que la lèvre de soupape (12) est en contact étroit avec la surface (7) à rendre étanche et forme un élément de raclage.

2. Ensemble d'étanchéité selon la revendication 1, **caractérisé en ce que** la première lèvre d'étanchéité (2) et le bourrelet étanchéité (13) sont reliés l'un à l'autre sensiblement en forme de Y, **en ce que** la base respective (15, 16) de la première lèvre d'étanchéité (2) et du bourrelet d'étanchéité (13) sont réunies en un centre de rotation commun imaginaire (D) d'une articulation (17), et **en ce que** le bourrelet d'étanchéité (13) peut pivoter autour du centre de rotation (D) et peut être appliqué de manière étanche contre la surface (7) à rendre étanche lorsque la première lèvre d'étanchéité (2) est soumise à une surpression.

3. Ensemble d'étanchéité selon la revendication 1 ou 2, **caractérisé en ce que** la première lèvre d'étanchéité (2) et le bourrelet d'étanchéité (13) sont constitués d'une matière présentant l'élasticité du caoutchouc et sont réalisés de manière à se prolonger l'un dans l'autre d'un seul tenant.

4. Ensemble d'étanchéité selon la revendication 2 ou 3, **caractérisé en ce que** la première lèvre d'étanchéité (2) et le bourrelet d'étanchéité (13) se prolongent l'un dans l'autre d'un seul tenant et sont réalisés de manière venue de matière avec l'articulation (17).

5. Ensemble d'étanchéité selon l'une quelconque des revendications 1 à 4, **caractérisé en ce que** la première lèvre d'étanchéité (2), la deuxième lèvre d'étanchéité (10) et le bourrelet d'étanchéité (13) sont constitués d'une matière présentant l'élasticité du caoutchouc.

6. Ensemble d'étanchéité selon l'une quelconque des revendications 1 à 5, **caractérisé en ce que** la première lèvre d'étanchéité (2), la deuxième lèvre d'étanchéité (10) et le bourrelet d'étanchéité (13) sont disposés sur une saillie axiale (18) d'un corps de support (19) de la bague d'étanchéité (1) et sont tournés radialement vers la surface (7) à rendre étanche.

7. Ensemble d'étanchéité selon l'une quelconque des revendications 1 à 6, **caractérisé en ce que**, de manière axialement adjacente au bourrelet d'étanchéité (13), sur le côté tourné axialement vers la deuxième lèvre d'étanchéité (10), est disposé un bourrelet de support (20) sensiblement correspondant.

8. Ensemble d'étanchéité selon l'une quelconque des revendications 1 à 7, **caractérisé en ce que** la première lèvre d'étanchéité (2) comprend plusieurs rainures de passage (3, 3.1, ...) disposées de manière répartie uniformément dans la direction périphérique.

9. Bague d'étanchéité d'un ensemble d'étanchéité selon l'une quelconque des revendications 1 à 8, **caractérisée en ce que** le bourrelet d'étanchéité (13) pouvant être actionné par la pression différentielle est disposé dans la direction axiale entre la première lèvre d'étanchéité (2) et la deuxième lèvre d'étanchéité (10).
